# FASCICULE DE BREVET EUROPEEN

(11) **EP 3 027 441 B1**
(45) Date de publication et mention de la délivrance du brevet: **22.11.2017**
(21) Numéro de dépôt: 14744106.7
(22) Date de dépôt: 25.07.2014
(51) Int. Cl.: B60G 15/06

(54) **PALIER DE BUTEE POUR UNE SUSPENSION D'UN VEHICULE**
AXIALWÄLZLAGER FÜR EINE FAHRZEUGAUFHÄNGUNG
AXIAL ROLLING BEARING FOR A VEHICLE SUSPENSION

(30) Priorité: 30.07.2013 FR 1357512
(43) Date de publication de la demande: 08.06.2016
(73) Titulaire: NTN-SNR Roulements, 74010 Annecy (FR)
(72) Inventeur: BUYS, Sébastien, F-74150 Vallieres (FR); DELARCHE, Sébastien, F-74320 Sevrier (FR)
(74) Mandataire: Alatis
(86) Numéro de dépôt international: PCT/EP2014/066094
(87) Numéro de publication internationale: WO 2015/014758

(56) Documents cités:
- EP-A1- 0 850 790
- EP-A2- 0 450 576
- DE-A1- 3 829 376
- DE-A1- 4 137 447
- DE-A1- 19 809 074
- DE-A1-102008 049 976
- FR-A1- 2 910 944
- FR-A1- 2 966 084
- FR-A1- 2 966 086
- GB-A- 2 347 905

## Description

### DOMAINE TECHNIQUE DE L'INVENTION

L'invention se rapporte à une butée de suspension pour une jambe de force comportant un ressort à boudin. L'invention se rapporte également à une jambe de suspension comportant une telle butée.

### ÉTAT DE LA TECHNIQUE ANTÉRIEURE

On connaît des jambes de suspension comportant un ressort à boudin, un amortisseur télescopique situé à l'intérieur du ressort à boudin, un tampon de choc servant de butée de fin de course d'amortissement de l'amortisseur télescopique et une butée de suspension tournante, comportant un palier à roulement dont le diamètre est sensiblement égal à celui du ressort à boudin. Il est alors possible, comme illustré par exemple dans le document GB2 347 905, de prévoir une coupelle monobloc, en métal embouti ou en matière plastique, constituant une interface entre d'un côté le palier à roulement, et de l'autre le ressort à boudin et le tampon de choc. Les efforts axiaux sont transmis entre le ressort et le palier par l'intermédiaire de la coupelle sans induire de déformation notable de cette dernière du fait des dimensions radiales voisines entre le palier et l'extrémité supérieure du ressort à boudin. Pour éviter que les déformations induites en cas de chocs par le tampon de choc sur la coupelle ne soient répercutées à l'interface entre la coupelle et le ressort, la zone contact entre la coupelle et le ressort à boudin est espacée axialement de la zone de contact entre la coupelle et le tampon de choc, d'où un encombrement axial important.

On connaît par ailleurs des jambes de suspension comportant un ressort à boudin, un amortisseur télescopique situé à l'intérieur du ressort à boudin, un tampon de choc servant de butée de fin de course d'amortissement de l'amortisseur télescopique et une butée de suspension tournante, comportant un palier à roulement dont le diamètre est sensiblement inférieur à celui du ressort à boudin et dont la rondelle supérieure sert également d'appui pour l'amortisseur télescopique. Une jambe de suspension de ce type est illustrée par exemple dans le document DE102008049976. On prévoit alors deux éléments distincts pour constituer l'interface entre d'une part la rondelle inférieure du roulement et d'autre part le ressort à boudin et le tampon de choc, à savoir: une coupelle en métal embouti pour reprendre les efforts exercés par le ressort à boudin et le tampon de choc et une pièce en matériau plastique de plus faible diamètre qui vient s'interposer entre la rondelle inférieure et la coupelle métallique. Mais cette construction en deux pièces est coûteuse et pénalisante en terme de masse.

### EXPOSÉ DE L'INVENTION

L'invention vise à remédier aux inconvénients de l'état de la technique et à proposer un assemblage simplifié pour une butée de suspension recevant à la fois un ressort à boudin et un tampon de choc.

Pour ce faire est proposée suivant un premier aspect de l'invention une butée de suspension pour une jambe de suspension comportant un ressort à boudin et un tampon de choc, la butée de suspension comportant un palier comportant au moins une rondelle supérieure métallique et une rondelle inférieure métallique tournant l'une par rapport à l'autre, et une coupelle monobloc, qui présente une face supérieure comportant une zone de contact avec la rondelle inférieure et une face inférieure comportant: un épaulement annulaire plan extérieur, et une portée annulaire au moins partiellement cylindrique tournée radialement vers l'extérieur délimitant avec l'épaulement extérieur une zone annulaire périphérique d'appui pour l'extrémité supérieure du ressort à boudin. La face inférieure comporte en outre une zone de logement d'une extrémité supérieure du tampon de choc, délimitée par un épaulement annulaire plan intérieur et par une face de confinement au moins partiellement cylindrique tournée radialement vers l'intérieur. La coupelle monobloc présente une cloison formant un pli annulaire constituant la face de confinement et la portée annulaire, la face de confinement étant située radialement à l'intérieur de la portée annulaire. La face supérieure de la coupelle monobloc comporte des nervures de renfort, dont certaines au moins s'étendent à l'intérieur du pli annulaire de la cloison.

La coupelle monobloc, de préférence réalisée en matière moulable, notamment en matière plastique ou en un matériau composite avec ou sans insert métallique, constitue à elle seule l'interface entre la rondelle inférieure du roulement, le ressort à boudin et le tampon de choc.

Par pli, on entend ici une forme de la cloison comportant une partie annulaire intérieure sur laquelle est formée la face de confinement, une partie annulaire extérieure sur laquelle est formée la portée cylindrique, et une partie intermédiaire reliant la partie annulaire intérieure et la partie annulaire extérieure, les parties annulaires intérieure et extérieure se faisant face, un volume creux annulaire étant constitué entre la partie annulaire intérieure et la partie annulaire extérieure, certaines au moins des nervures traversant ce volume creux pour relier la partie annulaire intérieure à la partie annulaire extérieure.

Cette forme évidée est favorable à un moulage et surtout un démoulage rapide, car les épaisseurs de matière sont relativement faibles et uniformes. Elle permet une grande compacité dans le sens axial de la butée, l'extrémité supérieure du ressort à boudin étant axialement en recouvrement avec l'extrémité supérieure du tampon de choc. Les nervures de renfort sont destinées à assurer une rigidité en flexion à la coupelle, tout en limitant sa masse. Elles permettent en particulier de limiter les déformations radiales de la coupelle au niveau du pli. À cet effet et de manière préférentielle, certaines au moins des nervures s'étendant à l'intérieur du pli de la cloison sont radiales. Les nervures permettent également de transférer radialement les efforts entre rondelle inférieure et ressort à boudin, tout en limitant le niveau de contraintes dans la coupelle. Suivant un mode de réalisation, certaines au moins des nervures délimitent des alvéoles polygonales. On gère ainsi plusieurs modes de déformation.

Suivant un mode de réalisation, certaines des nervures au moins peuvent être situées radialement à l'extérieur de la zone de contact. La zone de contact peut également comporter des nervures sur lesquelles repose la rondelle inférieure.

Préférentiellement, la cloison comporte des orifices d'évacuation disposés à une extrémité inférieure du pli annulaire pour évacuer l'eau qui pourrait s'accumuler dans le pli.

Suivant un mode de réalisation, la rondelle inférieure a un diamètre extérieur inférieur à un diamètre intérieur de la zone annulaire périphérique d'appui de l'extrémité supérieure du ressort à boudin.

De préférence, la zone de contact est située radialement à l'intérieur de la face de confinement.

Suivant un mode de réalisation, la rondelle supérieure forme une portée annulaire plane d'appui pour un amortisseur télescopique de la jambe de suspension, la portée annulaire plane d'appui s'étendant radialement vers l'intérieur par rapport à la rondelle inférieure.

On peut prévoir en outre un couvercle en appui sur la rondelle supérieure. Ce couvercle peut présenter une jupe périphérique formant avec un relief périphérique de la face supérieure de la coupelle monobloc un joint labyrinthe. Le couvercle peut avantageusement être encliqueté sur la coupelle monobloc, la jupe périphérique et le relief périphérique pouvant présenter à cet effet des zones d'encliquetage mutuel, ce qui permet de former un sous-ensemble cohérent entre le roulement et la coupelle, avant son montage sur le véhicule.

De préférence, la coupelle monobloc est moulée, de préférence par injection dans un moule à mouvement purement axial. En d'autres termes, les formes sont choisies de façon à éviter un moule à tiroirs latéraux, afin d'augmenter les cadences de fabrication et de limiter la complexité et les coûts.

Suivant un mode de réalisation, le palier est un palier à roulement, comportant des corps roulants en contact avec des chemins de roulement formés sur les rondelles supérieure et inférieure. Alternativement, le palier peut être un palier lisse, avec ou sans interposition d'une rondelle de friction entre la rondelle supérieure et la rondelle inférieure.

Suivant un autre aspect de l'invention, celle-ci a trait à une jambe de suspension comportant un ressort à boudin et un tampon de choc, ainsi qu'une butée de suspension telle que décrite précédemment, le ressort à boudin présentant une extrémité supérieure en appui contre la zone d'appui, le tampon de choc présentant une extrémité supérieure logée dans la zone de logement. Préférentiellement, la jambe de suspension comporte en outre un amortisseur télescopique traversant la butée de suspension et en appui contre une portée annulaire plane d'appui formée par la rondelle supérieure.

Suivant un autre aspect de l'invention, celle-ci a trait à une butée de suspension pour une jambe de suspension comportant un ressort à boudin. La rotation de la butée de suspension est assurée par un palier comportant une rondelle supérieure et une rondelle inférieure tournant l'une par rapport à l'autre. La butée comporte en outre une coupelle monobloc présentant une face supérieure comportant une zone de contact avec la rondelle inférieure du roulement et une face inférieure comportant un épaulement annulaire plan extérieur et une portée annulaire au moins partiellement cylindrique tournée radialement vers l'extérieur délimitant avec l'épaulement extérieur une zone annulaire périphérique d'appui pour l'extrémité supérieure du ressort à boudin. La coupelle monobloc, de préférence réalisée en matière moulable, notamment en matière plastique ou en un matériau composite avec ou sans insert métallique, constitue à elle seule l'interface entre la rondelle inférieure du roulement et le ressort à boudin. La face supérieure de la coupelle monobloc comporte des nervures de renfort situées radialement à l'extérieur de la zone de contact. Ces nervures sont destinées à assurer une rigidité en flexion à la coupelle, tout en limitant sa masse. De préférence, certaines au moins des nervures sont radiales. Les nervures permettent de transférer radialement les efforts entre rondelle inférieure et ressort à boudin, tout en limitant le niveau de contraintes dans la coupelle. De préférence, certaines au moins des nervures délimitent des alvéoles polygonales. On gère ainsi plusieurs modes de déformation. La pièce monobloc constituant la coupelle peut être réalisée moulage par injection dans un moule à mouvement purement axial.

La rondelle supérieure et la rondelle inférieure sont de préférence métalliques. Suivant un mode de réalisation, le palier est un palier à roulement, comportant des corps roulants en contact avec des chemins de roulement formés sur les rondelles supérieure et inférieure. Alternativement, le palier peut être un palier lisse, avec ou sans interposition d'une rondelle de friction entre la rondelle supérieure et la rondelle inférieure.

La butée de suspension ainsi définie peut être intégrée à une jambe de suspension comportant un ressort à boudin, le cas échéant un tampon de choc, et le cas échéant un amortisseur télescopique, qui peut le cas échéant prendre appui contre la rondelle supérieure du palier.

Les différents aspects de l'invention peuvent naturellement être combinés.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une jambe de suspension et d'une butée de suspension suivant un premier mode de réalisation de l'invention;
- la figure 2, une vue en perspective d'une coupelle de la butée de la figure 1;
- la figure 3, une vue en perspective d'une coupelle suivant une variante de réalisation;
- la figure 4, une vue en coupe d'une jambe de suspension suivant un autre mode de réalisation de l'invention.

Pour plus de clarté, les éléments identiques sont repérés par des signes de référence identiques sur l'ensemble des figures.

### DESCRIPTION DÉTAILLÉE D'UN MODE DE RÉALISATION

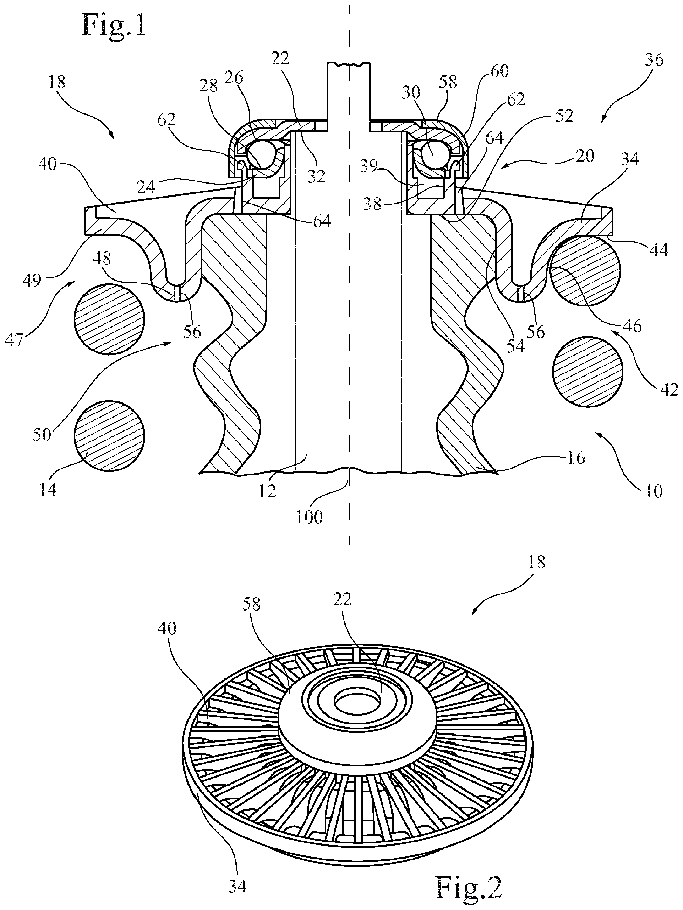

En référence aux figures **1** et **2****,** une jambe de suspension **10** est composée, dans sa partie supérieure, d'un amortisseur télescopique **12,** d'un ressort à boudin **14,** d'un tampon de choc **16** et d'une butée de suspension tournante **18** assurant l'interface entre les éléments précédents et la caisse du véhicule (non représentée).

La rotation de la butée **18** autour d'un axe **100** est assurée par un roulement **20** comportant une rondelle supérieure métallique **22** et une rondelle inférieure métallique **24,** de préférence réalisées par emboutissage d'une tôle, et définissant des chemins de roulement **26, 28** sur lesquels roulent des corps roulants **30,** en l'espèce des billes. La rondelle supérieure **22** forme une portée annulaire plane d'appui **32** pour l'amortisseur télescopique **12,** s'étendant radialement vers l'intérieur par rapport aux chemins de roulement **26, 28.**

L'interface entre d'une part le roulement **20** et d'autre part l'amortisseur télescopique **12,** le ressort à boudin **14** et le tampon de choc **16** est assuré par une coupelle d'appui monobloc **34** en matière plastique.

Cette coupelle présente sur sa face supérieure **36** une zone de contact **38** avec la rondelle inférieure **24** du roulement **20,** composée de nervures **39,** la rondelle inférieure **24** étant en appui sur les arêtes des nervures **39.** Les nervures **39** peuvent être radiales comme illustré sur la figure **1****,** ou circulaires et concentriques. La face supérieure **36** de la coupelle **34** comporte en outre des nervures de renfort **40** situées radialement à l'extérieur de la zone de contact **38,** s'étendant depuis cette dernière jusqu'à la périphérie extérieure de la coupelle **34.**

La face inférieure **42** de la coupelle **34** présente à sa périphérie un épaulement annulaire plan extérieur **44** et une portée annulaire au moins partiellement cylindrique **46** tournée radialement vers l'extérieur délimitant avec l'épaulement extérieur **44** une zone annulaire périphérique d'appui **47** pour l'extrémité supérieure du ressort à boudin.

La coupelle **34** présente une cloison **49** formant un pli annulaire **48** formant la portée annulaire **46** et entourant extérieurement une zone de logement **50** d'une extrémité supérieure du tampon de choc **16** formée par un épaulement annulaire plan **52** et par une face de confinement **54** au moins partiellement cylindrique tournée radialement vers l'intérieur. La face de confinement **54** de la zone de logement **50** de l'extrémité supérieure du tampon de choc **16** est située radialement à l'intérieur de la portée annulaire **46** de la zone d'appui de l'extrémité supérieure du ressort **14.** La rondelle inférieure **24** a un diamètre inférieur au diamètre de la portée cylindrique **46** et de préférence inférieur au diamètre de la face de confinement **54.** Des orifices d'évacuation **56** situés radialement à l'extérieur de la zone de contact **38** avec la rondelle inférieure, de préférence à la périphérie immédiate de cette zone, permettent le cas échéant une évacuation de liquide.

Un couvercle de protection **58** du roulement **20** vient en appui sur la rondelle supérieure **22** et présente une jupe périphérique **60** formant avec un relief périphérique ou des ergots **62** de la face supérieure **36** de la coupelle **34** un joint labyrinthe. La jupe périphérique **60** et le relief périphérique **62** présentent des zones d'encliquetage mutuel qui ne sont pas en prise après le montage de la butée sur le véhicule, mais permettent de constituer un sous-ensemble cohérent préassemblé entre le roulement **20** et la coupelle **34** avant le montage sur le véhicule.

De manière remarquable, la coupelle **34** présente une lumière périphérique axiale **64** en face de chacun des crochets, de sorte qu'aucune partie de la coupelle **34** ne se trouve en recouvrement axial avec les crochets **62.** Cette disposition permet une réalisation de la pièce **34** par moulage par injection dans un moule à mouvement purement axial, parallèlement à l'axe de rotation **100** du roulement **20.**

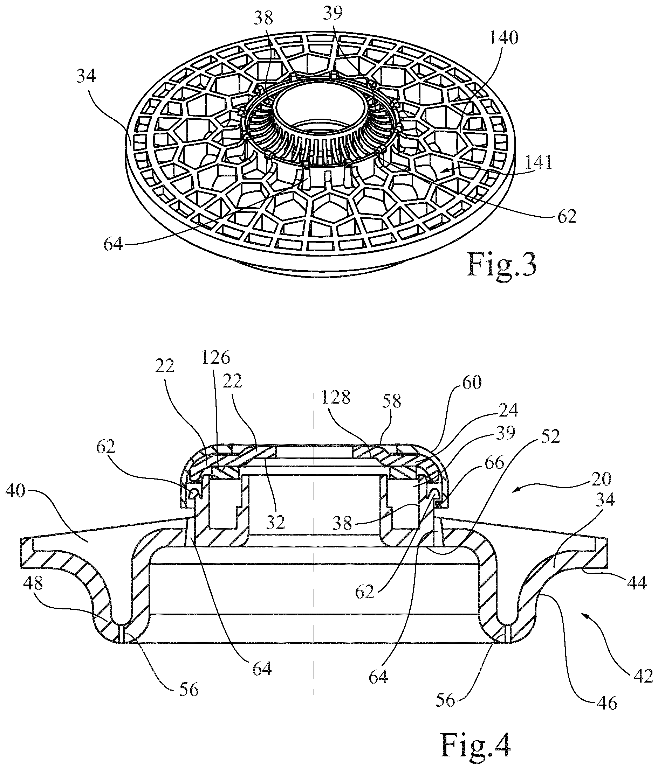

La coupelle **34** illustrée sur la figure **3** présente sur sa face supérieure des nervures **140** délimitant des alvéoles polygonales **141.** La zone de contact **38** est identique à celle de la coupelle **34** de la figure **1****.** En particulier, on y retrouve les crochets **62** situés axialement dans le prolongement des lumières axiales **64,** qui permettent un moulage dans un moule en deux pièces en mouvement relatif de translation axiale.

Suivant un autre mode de réalisation, illustré sur la figure **4****,** le palier **20** est un palier lisse, la rondelle supérieure **22** et la rondelle inférieure **24** présentant des pistes de friction annulaires **126, 128** au contact l'une de l'autre. On peut également envisager un palier lisse avec interposition d'une rondelle de friction entre la rondelle supérieure **22** et la rondelle inférieure **24.** On distingue sur cette figure les crochets **62** s'étendant radialement vers le couvercle **60** dans le prolongement des lumières axiales **64,** et venant coopérer avec une zone d'encliquetage constituée par des crochets **66** réalisés sur le couvercle pour réaliser un encliquetage élastique entre couvercle **60** et coupelle **34,** donnant au sous-ensemble sa cohérence avant assemblage sur le véhicule.

D'autres variantes sont naturellement possibles, notamment en combinant entre elles des caractéristiques des différents modes de réalisations. Il est notamment possible de prévoir un insert, notamment un insert métallique, de renfort de la coupelle. On peut prévoir des nervures radiales se croisant avec des nervures en arc de cercle.

## Revendications

1. Butée de suspension (18) pour une jambe de suspension (10) comportant un ressort à boudin (14) et un tampon de choc (16), la butée de suspension (18) comportant:
- un palier (20) comportant au moins une rondelle supérieure métallique (22) et une rondelle inférieure métallique (24) tournant l'une par rapport à l'autre;
- une coupelle monobloc (34) présentant une face supérieure (36) comportant une zone de contact (38) avec la rondelle inférieure (24) et une face inférieure (42) comportant:
i. un épaulement annulaire plan extérieur (44),
ii. une portée annulaire au moins partiellement cylindrique (46) tournée radialement vers l'extérieur délimitant avec l'épaulement extérieur (44) une zone annulaire périphérique d'appui (47) pour l'extrémité supérieure du ressort à boudin (14);
iii. une zone de logement (50) d'une extrémité supérieure du tampon de choc (16), délimitée par un épaulement annulaire plan intérieur (52) et par une face de confinement (54) au moins partiellement cylindrique tournée radialement vers l'intérieur,
**caractérisée en ce que** la coupelle monobloc (34) présente une cloison (49) formant un pli annulaire (48) constituant la face de confinement (54) et la portée annulaire (46), la face de confinement (54) étant située radialement à l'intérieur de la portée annulaire (46), la face supérieure (36) de la coupelle monobloc (34) comportant des nervures de renfort (40, 140) dont certaines au moins s'étendent à l'intérieur du pli annulaire (48) de la cloison (49).

2. Butée selon la revendication 1, **caractérisée en ce que** la coupelle monobloc est en matière plastique ou en matière composite.

3. Butée selon l'une quelconque des revendications précédentes, **caractérisée en ce que** certaines au moins des nervures (40) s'étendant à l'intérieur du pli sont radiales.

4. Butée selon l'une quelconque des revendications précédentes, **caractérisée en ce que** certaines au moins des nervures (140) délimitent des alvéoles polygonales (141).

5. Butée selon l'une quelconque des revendications précédentes, **caractérisée en ce que** la zone de contact (38) comporte des nervures (39).

6. Butée selon l'une quelconque des revendications précédentes, **caractérisée en ce que** la cloison (49) comporte des orifices d'évacuation (56) disposés à une extrémité inférieure du pli annulaire (48)

7. Butée selon l'une quelconque des revendications précédentes, **caractérisée en ce que** la rondelle inférieure (24) a un diamètre extérieur inférieur à un diamètre intérieur de la zone annulaire périphérique d'appui (47) de l'extrémité supérieure du ressort à boudin (14).

8. Butée selon l'une quelconque des revendications précédentes, **caractérisée en ce que** la zone de contact (38) est située radialement à l'intérieur de la face de confinement (54).

9. Butée selon l'une quelconque des revendications précédentes, **caractérisée en ce que** la rondelle supérieure (22) forme une portée annulaire plane d'appui (32) pour un amortisseur télescopique (12) de la jambe de suspension (10), la portée annulaire plane d'appui (32) s'étendant radialement vers l'intérieur par rapport à la rondelle inférieure.

10. Butée selon l'une quelconque des revendications précédentes, **caractérisée en ce qu'**elle comporte un couvercle (58) en appui sur la rondelle supérieure (22) et présentant une jupe périphérique (60) encliquetée sur la coupelle monobloc.

11. Butée selon l'une quelconque des revendications précédentes, **caractérisée en ce que** le palier (20) est un palier à roulement, comportant des corps roulants (30) en contact avec des chemins de roulement (26, 28) formés sur les rondelles supérieure et inférieure (22, 24).

12. Butée selon l'une quelconque des revendications 1 à 10, **caractérisée en ce que** le palier (20) est un palier lisse, avec ou sans interposition d'une rondelle de friction entre la rondelle supérieure (22) et la rondelle inférieure (24)

13. Jambe de suspension (10) comportant un ressort à boudin (14) et un tampon de choc (16), **caractérisé en ce qu'**elle comporte une butée de suspension (18) selon l'une quelconque des revendications précédentes, le ressort à boudin (14) présentant une extrémité supérieure en appui contre la zone d'appui (47), le tampon de choc (16) présentant une extrémité supérieure logée dans la zone de logement (50).

14. Jambe de suspension (10) selon la revendication précédente, comportant en outre un amortisseur télescopique (12) traversant la butée de suspension (18) et en appui contre une portée annulaire plane d'appui (32) formée par la rondelle supérieure (22).

## Patentansprüche

1. Anschlagpuffer (18) für ein Federbein (10), das eine Schraubenfeder (14) und ein Gummipuffer (16) umfasst, wobei der Anschlagpuffer (18) folgendes aufweist:
- ein Lager (20) mit mindestens einer oberen metallischen Scheibe (22) und einer unteren metallischen Scheibe (24), die gegeneinander laufen;
- einen Monoblock-Federteller (34) mit einer Oberseite (36), welche einen Kontaktbereich (38) zur unteren Scheibe (24) aufweist, und einer Unterseite (42), die Folgendes umfasst:
i. eine äußere ebene ringförmige Schulter (44);
ii. eine ringförmige Fläche, die zumindest teilweise zylindrisch (46) und radial nach außen gerichtet ist, und mit der äußeren Schulter (44) einen ringförmigen umlaufenden Anlagebereich (47) für das obere Ende der Schraubenfeder (14) abgrenzt;
iii. einen Aufnahmebereich (50) eines oberen Endes des Gummipuffers (16), der durch eine innere ebene ringförmige Schulter (52) und durch eine zumindest teilweise zylindrische Einschließungsfläche (54), die radial nach innen gerichtet ist, abgegrenzt wird, **dadurch gekennzeichnet, dass** der Monoblock-Federteller (34) eine Trennwand (49) aufweist, die eine ringförmige Falte (48) formt, welche die Einschließungsfläche (54) und die ringförmige Fläche (46) bildet, wobei sich die Einschließungsfläche (54) radial im Innern der ringförmigen Fläche (46) befindet, wobei die Oberseite (36) des Monoblock-Federtellers (34) Verstärkungsrippen (40, 140) aufweist, von denen wenigstens einige sich im Innern der ringförmigen Falte (48) der Trennwand (49) erstrecken.

2. Anschlagpuffer nach Anspruch 1, **dadurch gekennzeichnet, dass** der Monoblock-Federteller aus Kunststoff oder Verbundmaterial besteht.

3. Anschlagpuffer nach einem der vorhergehenden Ansprüche, **dadurch gekennzeichnet, dass** zumindest einige der Rippen (40), die sich im Innern der Falte erstecken, radial sind.

4. Anschlagpuffer nach einem der vorhergehenden Ansprüche, **dadurch gekennzeichnet, dass** zumindest einige der Rippen (140) mehreckige Alveolen (141) abgrenzen.

5. Anschlagpuffer nach einem der vorhergehenden Ansprüche, **dadurch gekennzeichnet, dass** der Kontaktbereich (38) Rippen (39) enthält.

6. Anschlagpuffer nach einem der vorhergehenden Ansprüche, **dadurch gekennzeichnet, dass** die Trennwand (49) Ablassöffnungen (56) aufweist, die an einem unteren Ende der ringförmigen Falte (48) angeordnet sind.

7. Anschlagpuffer nach einem der vorhergehenden Ansprüche, **dadurch gekennzeichnet, dass** die untere Scheibe (24) einen Außendurchmesser hat, der kleiner ist als der Innendurchmesser des ringförmigen umlaufenden Anlagebereichs (47) des oberen Endes der Schraubenfeder (14).

8. Anschlagpuffer nach einem der vorhergehenden Ansprüche, **dadurch gekennzeichnet, dass** sich der Kontaktbereich (38) radial im Innern der Einschließungsfläche (54) befindet.

9. Anschlagpuffer nach einem der vorhergehenden Ansprüche, **dadurch gekennzeichnet, dass** die obere Scheibe (22) eine ringförmige ebene Anlagefläche (32) für einen Teleskopstoßdämpfer (12) des Federbeins (10) bildet, wobei sich die ringförmige ebene Anlagefläche (32) relativ zur unteren Scheibe radial nach innen erstreckt.

10. Anschlagpuffer nach einem der vorhergehenden Ansprüche, **dadurch gekennzeichnet, dass** er eine Abdeckung (58) aufweist, die auf der oberen Scheibe (22) aufliegt, und eine umfängliche Schürze (60) aufweist, die auf den Monoblock-Federteller aufgeclippt ist.

11. Anschlagpuffer nach einem der vorhergehenden Ansprüche, **dadurch gekennzeichnet, dass** das Lager (20) ein Wälzlager ist, das Wälzkörper (30) aufweist, die mit Rollwegen (26, 28) in Kontakt sind, welche auf der oberen und der unteren Scheibe (22, 24) geformt sind.

12. Anschlagpuffer nach einem der Ansprüche 1 bis 10, **dadurch gekennzeichnet, dass** das Lager (20) ein Gleitlager ist, mit oder ohne Einsetzung einer Gleitscheibe zwischen der oberen Scheibe (22) und der unteren Scheibe (24).

13. Federbein (10), das eine Schraubenfeder (14) und ein Gummipuffer (16) aufweist, **dadurch gekennzeichnet, dass** es einen Anschlagpuffer (18) gemäß einem der vorhergehenden Ansprüche aufweist, wobei die Schraubenfeder (14) ein oberes Ende aufweist, das am Anlagebereich (47) anliegt, wobei der Gummipuffer (16) ein oberes Ende aufweist, das im Aufnahmebereich (50) liegt.

14. Federbein (10) nach dem vorhergehenden Anspruch, welches des Weiteren einen Teleskopstoßdämpfer (12) aufweist, der durch den Anschlagpuffer (18) führt und an einer durch die obere Scheibe (22) gebildeten ringförmigen, ebenen Anlagefläche (32) anliegt.

## Claims

1. A bump stop (18) for a suspension strut (10) comprising a coil spring (14) and a shock-absorbing bumper (16), with the bump stop (18) comprising:
- a bearing (20) comprising at least one metal upper washer (22) and one metal lower washer (24) rotating relative to each other;
- a unitary cup (34) having an upper face (36) comprising an area (38) of contact with the lower washer (24) and a lower face (42) comprising:
i. an outer planar annular shoulder (44),
ii. an at least partially cylindrical annular seat (46) turned radially outwards and defining, with the outer shoulder (44), a peripheral annular support area (47) for the top end of the coil spring (14);
iii. an area (50) for receiving one top end of the shock-absorbing bumper (16), defined by an outer planar annular shoulder (52) and by an at least partially cylindrical containment face (54) turned radially inwards,
**characterized in that** the unitary cup (34) comprises a partition (49) forming an annular fold (48) constituting the confinement face (54) and the annular seat (46), with the containment face (54) being located radially inside the annular seat (46), with the upper face (36) of the unitary cup (34) comprising reinforcement ribs (40, 140), at least some of which extend into the annular fold (48) of the partition (49).

2. A bump stop according to claim 1, **characterized in that** the unitary cup is made of plastic or a composite material.

3. A bump stop according to any one of the preceding claims, **characterized in that** at least some of the ribs (40) which extend into the fold are radial.

4. A bump stop according to any one of the preceding claims, **characterized in that** at least some of the ribs (140) define polygonal cells (141).

5. A bump stop according to any one of the preceding claims, **characterized in that** the contact area (38) comprises ribs (39).

6. A bump stop according to any one of the preceding claims, **characterized in that** the partition (49) comprises drain holes (56) located at a lower end of the annular fold (48).

7. A bump stop according to any one of the preceding claims, **characterized in that** the lower washer (24) has an outer diameter smaller than an inner diameter of the peripheral annular support area (47) of the top end of the coil spring (14).

8. A bump stop according to any one of the preceding claims, **characterized in that** the contact area (38) is located radially inside the containment face (54).

9. A bump stop according to any one of the preceding claims, **characterized in that** the upper washer (22) forms a planar annular support seat (32) for a telescopic shock-absorber (12) of the suspension strut (10), with the planar annular support seat (32) extending radially inwards with respect to the lower washer.

10. A bump stop according to any one of the preceding claims, **characterized in that** it comprises a cover (58) bearing on the upper washer (22) and having a peripheral skirt (60) snapped onto the unitary cup.

11. A bump stop according to any one of the preceding claims, **characterized in that** the bearing (20) is a roller bearing having rolling bodies (30) in contact with raceways (26, 28) formed on the upper and lower washers (22, 24).

12. A bump stop according to any one of claims 1 to 10, **characterized in that** the bearing (20) is a plain bearing, with or a without insertion of a friction washer between the upper washer (22) and the lower washer (24).

13. A suspension strut (10) comprising a coil spring (14) and a shock-absorbing bumper (16), **characterized in that** it comprises a bump stop (18) according to any one of the preceding claims, with the spring coil (14) having a top end bearing against the support area (47), with the shock-absorbing bumper (16) having a top end received in the receiving area (50).

14. A suspension strut (10) according to the preceding claim, further comprising a telescopic shock-absorber (12) passing through the bump stop (18) and bearing against a planar annular support seat (32) formed by the upper washer (22).
